# EUROPEAN PATENT APPLICATION

(11) **EP 4 826 983 A1**
(43) Date of publication of application: **21.10.2026**
(21) Application number: 24935732.8
(22) Date of filing: 16.12.2024
(51) Int. Cl.: H02M 7/521

(54) **CONTROLLABLE CURRENT-SOURCE CONVERTER VALVE TOPOLOGY AND CONTROL METHOD THEREFOR, DEVICE, AND STORAGE MEDIUM**

(30) Priority: 19.04.2024 CN 202410475934
(71) Applicant: China Electric Power Research Institute, Beijing 102209 (CN)
(72) Inventor: GAO, Chong, Beijing 102209 (CN); HE, Zhiyuan, Beijing 102209 (CN); YANG, Jun, Beijing 102209 (CN); SHENG, Caiwang, Beijing 102209 (CN); WANG, Chenghao, Beijing 102209 (CN); ZHANG, Jing, Beijing 102209 (CN); ZHANG, Juanjuan, Beijing 102209 (CN); LI, Tingting, Beijing 102209 (CN)
(74) Representative: Murgitroyd & Company
(86) International application number: PCT/CN2024/139630
(87) International publication number: WO 2025/218204

(57) **Abstract**

The present disclosure relates to the technical field of direct-current power transmission. Provided in the embodiments are a controllable current-source converter valve topology and a control method therefor, a device, and a storage medium. The controllable current-source converter valve topology comprises: a current-limiting reactor connected to the DC side of a turn-off six-pulse converter bridge, each bridge arm of the turn-off six-pulse converter bridge being connected to a reactor, the midpoint tap of each bridge arm of the turn-off six-pulse converter bridge leading out to form a three-phase output, and each output lead of the three-phase output being connected to a three-phase power grid by means of a respective first reactor; the three first reactors are respectively connected to three first switches in parallel; and a connection point of each three-phase output and the first reactor connected thereto is sequentially connected to a second reactor and a capacitor, each capacitor being connected to a second switch in parallel.

## Description

### CROSS-REFERENCE TO RELATED APPLICATION(S)

The present disclosure claims priority to Chinese Patent Application No. 202410475934.4, filed with the China National Intellectual Property Administration on April 19, 2024, and entitled "Controllable Current Source Type Converter Valve Topology and Control Method thereof", the entire contents of which are incorporated herein by reference.

### TECHNICAL FIELD

The present disclosure relates to the field of direct current power transmission technologies, and in particular, to a controllable current source type converter valve topology, a control method, a device, and a storage medium.

### BACKGROUND

High-voltage direct current (HVDC) power transmission technology is a key technology for long-distance power transmission. Currently, there are two technical routes: a conventional direct current (DC) and a flexible DC. The conventional DC relies on alternating current (AC) grid commutation, and a problem of commutation failure in multi-infeed DC has become increasingly prominent. With an access of multiple DC infeed points in developed regions, a risk of large-scale cascading commutation failures poses a challenge to a short-circuit capacity of a system. Therefore, an application range of the technology will not be able to be expanded.

Although flexible DC transmission technology does not have the problem of commutation failure and has characteristics of flexible and controllable power, and may also operate in grid-forming mode, and a voltage polarity does not need to follow upon a power reverses, however, a cost of a device is high, a loss is large, and a capacity is insufficient.

### SUMMARY

To overcome the above deficiencies, the present disclosure provides a controllable current source type converter valve topology, a control method, a device, and a storage medium.

In a first aspect, a controllable current source type converter valve topology is provided. The controllable current source type converter valve topology includes:
a current-limiting reactor connected to a DC side of a turn-off controllable six-pulse converter bridge, where each bridge arm of the turn-off controllable six-pulse converter bridge is provided with a reactor, three-phase outlets are provided by tapping an intermediate point of each bridge arm of the turn-off controllable six-pulse converter bridge, and each outlet wire of the three-phase outlets is connected to a three-phase grid via three first reactors respectively; the three first reactors are respectively connected in parallel with three first switches; a connection point between each three-phase outlet and a first reactor connected to the three-phase outlet is sequentially connected to a second reactor and a capacitor, and each capacitor is connected in parallel with a second switch.

Preferably, the turn-off controllable six-pulse converter bridge includes: a first branch, a second branch, and a third branch connected in parallel with each other; where
the first branch includes a first turn-off controllable device topology structure and a second turn-off controllable device topology structure connected in series;
the second branch includes a third turn-off controllable device topology structure and a fourth turn-off controllable device topology structure connected in series; and
the third branch includes a fifth turn-off controllable device topology structure and a sixth turn-off controllable device topology structure connected in series.

Preferably, a turn-off controllable device topology structure includes a main branch and an auxiliary branch connected in parallel with each other; where
the main branch includes: a saturable reactor, a thyristor, and an H-bridge structure connected in series; and
the auxiliary branch includes: an IGBT and a thyristor connected in series.

Further, the H-bridge structure includes a first IGBT, a second IGBT, a third IGBT, and a fourth IGBT; where
a series branch provided by the first IGBT and the second IGBT is connected in parallel with a series branch provided by the third IGBT and the fourth IGBT, and a capacitor is connected between a connection point of the first IGBT and the second IGBT and a connection point of the third IGBT and the fourth IGBT.

Further, the main branch is provided with a plurality of thyristors, and the auxiliary branch is provided with a plurality of IGBTs and a plurality of thyristors.

Further, a configuration ratio of a number of reactors connected on a bridge arm of the turn-off controllable six-pulse converter bridge to a number of thyristors included in the turn-off controllable device topology structure connected on the bridge arm of the turn-off controllable six-pulse converter bridge is 2:x, where x is any value between 8 and 13, inclusive.

Further, the turn-off controllable device topology structure further includes an arrester connected in parallel with the main branch and the auxiliary branch.

In a second aspect, a control method based on the controllable current source type converter valve topology is provided. The method includes:
taking a voltage zero crossing point of the capacitor as an initial timing moment of a sequence, and performing inter-bridge arm commutation of the turn-off controllable six-pulse converter bridge through a trigger angle;
where, in response to a current of the auxiliary branch of the turn-off controllable device topology structure of the controllable current source type converter valve topology reaching a maximum, commutating the auxiliary branch of the turn-off controllable device topology structure to the main branch; and in response to the current of the auxiliary branch of the turn-off controllable device topology structure of the controllable current source type converter valve topology reaching zero, commutating the main branch of the turn-off controllable device topology structure to the auxiliary branch.

Preferably, the performing inter-bridge arm commutation of the turn-off controllable six-pulse converter bridge includes:
closing the thyristor of the main branch of the first turn-off controllable device topology structure and the first IGBT and the fourth IGBT of the H-bridge structure, closing the IGBT and the thyristor of the auxiliary branch of the first turn-off controllable device topology structure, closing the IGBT and the thyristor of the auxiliary branch of the third turn-off controllable device topology structure, opening the second IGBT and the third IGBT of the H-bridge structure of the main branch of the first turn-off controllable device topology structure, and opening all IGBTs of the H-bridge structure of the main branch of the third turn-off controllable device topology structure, in response to performing inter-bridge arm commutation between the first turn-off controllable device topology structure and the third turn-off controllable device topology structure of the controllable current source type converter valve topology.

Preferably, the commutating the main branch of the turn-off controllable device topology structure to the auxiliary branch includes:
closing the IGBT and the thyristor of the auxiliary branch of the turn-off controllable device topology structure, opening the first IGBT and the fourth IGBT of the H-bridge structure of the main branch of the turn-off controllable device topology structure, and opening the thyristor of the main branch after current transfer is completed.

Preferably, the commutating the auxiliary branch of the turn-off controllable device topology structure to the main branch includes:
closing the thyristor of the main branch of the turn-off controllable device topology structure and the second IGBT and the third IGBT of the H-bridge structure, closing all IGBTs and thyristors of the auxiliary branch, and opening the IGBT and the thyristor of the auxiliary branch after current transfer is completed.

In a third aspect, an electronic device is provided. The electronic device includes the controllable current source type converter valve topology according to any one of the first aspect.

In a fourth aspect, a computer-readable storage medium is provided. The computer-readable storage medium is stored with a computer program, and the computer program is configured to execute the method according to any one of the second aspect.

One or more of the above technical solutions of the present disclosure have at least one of beneficial effects:
the present disclosure provides a controllable current source type converter valve topology, a control method, a device, and a storage medium, the controllable current source type converter valve topology includes: a current-limiting reactor connected to a DC side of a turn-off controllable six-pulse converter bridge, where each bridge arm of the turn-off controllable six-pulse converter bridge is provided with a reactor, three-phase outlets are provided by tapping an intermediate point of each bridge arm of the turn-off controllable six-pulse converter bridge, and each outlet wire of the three-phase outlets is connected to a three-phase grid via three first reactors respectively; the three first reactors are respectively connected in parallel with three first switches; a connection point between each three-phase outlet and a first reactor connected to the three-phase outlet is sequentially connected to a second reactor and a capacitor, and each capacitor is connected in parallel with a second switch. The circuit topology provided by the present disclosure uses only controllable devices, passive components such as capacitors and inductors, etc., offering relatively flexible implementation technology, simplicity, ease of operation, and flexible control.

### BRIEF DESCRIPTION OF THE DRAWINGS

FIG. 1 is a block diagram of a main structure of a controllable current source type converter valve topology according to embodiments of the present disclosure.
FIG. 2 is a block diagram of a main structure of a turn-off controllable six-pulse converter bridge according to embodiments of the present disclosure.
FIG. 3 is a schematic diagram of a bridge arm commutation process of a controllable current source type converter valve topology according to embodiments of the present disclosure.

### DETAILED DESCRIPTION

The specific implementations of the present disclosure will be described in further detail below with reference to the accompanying drawings.

In order to make the objectives, technical solutions, and advantages of the embodiments of the present disclosure clear, the technical solutions in the embodiments of the present disclosure will be described clearly and completely below with reference to the accompanying drawings in the embodiments of the present disclosure. However, the described embodiments are a part of the embodiments of the present disclosure, rather than all the embodiments. Based on the embodiments of the present disclosure, all other embodiments obtained by a person of ordinary skill in the art without making creative efforts shall belong to the protection scope of the present disclosure.

As disclosed in the background, high-voltage direct current (HVDC) power transmission technology is a key technology for long-distance power transmission. Currently, there are two technical routes: a conventional direct current (DC) and a flexible DC. The conventional DC relies on alternating current (AC) grid commutation, and a problem of commutation failure in multi-infeed DC has become increasingly prominent. With an access of multiple DC infeed points in developed regions, a risk of large-scale cascading commutation failures poses a challenge to a short-circuit capacity of a system. Therefore, an application range of the technology will not be able to be expanded.

Although flexible DC transmission technology does not have the problem of commutation failure and has characteristics of flexible and controllable power, and may also operate in grid-forming mode, and a voltage polarity does not need to follow upon a power reverses, however, a cost of a device is high, a loss is large, and a capacity is insufficient.

To improve the above problems, the present disclosure provides a controllable current source type converter valve topology and a control method thereof. The controllable current source type converter valve topology includes: a current-limiting reactor connected to a DC side of a turn-off controllable six-pulse converter bridge, where each bridge arm of the turn-off controllable six-pulse converter bridge is provided with a reactor, three-phase outlets (e.g., three-phase output terminals) are provided by tapping an intermediate point of each bridge arm of the turn-off controllable six-pulse converter bridge, and each outlet wire of the three-phase outlets is connected to a three-phase grid via three first reactors respectively; the three first reactors are respectively connected in parallel with three first switches; a connection point between each three-phase outlet and a first reactor connected to the three-phase outlet is sequentially connected to a second reactor and a capacitor, and each capacitor is connected in parallel with a second switch. The circuit topology provided by the present disclosure uses only controllable devices, passive components such as capacitors and inductors, etc., offering relatively flexible implementation technology, simplicity, ease of operation, and flexible control.

The above solution is described in detail below.

### Example 1

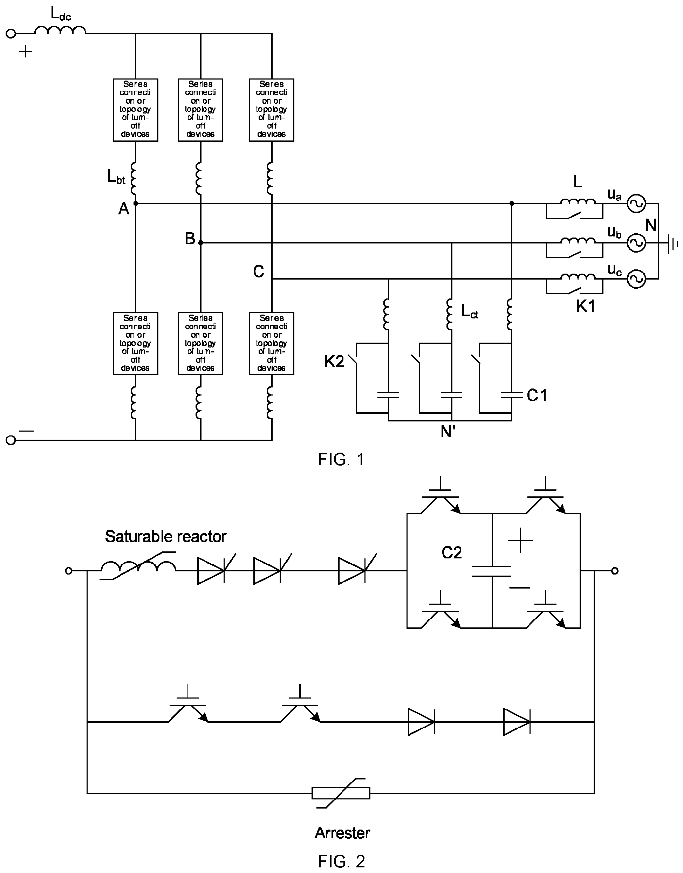

Referring to FIG. 1, FIG. 1 is a block diagram of a main structure of a controllable current source type converter valve topology according to an embodiment of the present disclosure.

As shown in FIG. 1, the controllable current source type converter valve topology in the embodiments of the present disclosure mainly includes:
a current-limiting reactor L_{dc} connected to a DC side of a turn-off controllable six-pulse converter bridge, where each bridge arm of the turn-off controllable six-pulse converter bridge is provided with a reactor L_{bt}, three-phase outlets are provided by tapping an intermediate point of each bridge arm of the turn-off controllable six-pulse converter bridge, and each outlet wire of the three-phase outlets is connected to a three-phase grid via three first reactors L respectively; the three first reactors L are respectively connected in parallel with three first switches K1; a connection point between each three-phase outlet and a first reactor L connected to the three-phase outlet is sequentially connected to a second reactor L_{ct} and a capacitor C1, and each capacitor is connected in parallel with a second switch K2.

In the present embodiment, as shown in FIG. 2, the turn-off controllable six-pulse converter bridge includes: a first branch, a second branch, and a third branch connected in parallel with each other; where
the first branch includes a first turn-off controllable device topology structure and a second turn-off controllable device topology structure connected in series;
the second branch includes a third turn-off controllable device topology structure and a fourth turn-off controllable device topology structure connected in series; and
the third branch includes a fifth turn-off controllable device topology structure and a sixth turn-off controllable device topology structure connected in series.

Preferably, the turn-off controllable device topology structure includes a main branch and an auxiliary branch connected in parallel with each other; where
the main branch includes: a saturable reactor, a thyristor, and an H-bridge structure connected in series; and
the auxiliary branch includes: an insulated gate bipolar transistor (IGBT) and a thyristor connected in series.

In an implementation, the H-bridge structure includes a first IGBT, a second IGBT, a third IGBT, and a fourth IGBT; where
a series branch provided by the first IGBT and the second IGBT is connected in parallel with a series branch provided by the third IGBT and the fourth IGBT, and a capacitor C2 is connected between a connection point of the first IGBT and the second IGBT and a connection point of the third IGBT and the fourth IGBT.

In an implementation, the main branch is provided with a plurality of thyristors, and the auxiliary branch is provided with a plurality of IGBTs and a plurality of thyristors.

In an implementation, a configuration ratio of a number of reactors connected on a bridge arm of the turn-off controllable six-pulse converter bridge to a number of thyristors included in the turn-off controllable device topology structure connected on the bridge arm of the turn-off controllable six-pulse converter bridge is 2:x, where x is any value between 8 and 13, inclusive.

In an implementation, the turn-off controllable device topology structure further includes an arrester connected in parallel with the main branch and the auxiliary branch.

In the controllable current source type converter valve topology designed by the present disclosure, the main branch is turned on by utilizing a voltage difference of parallel branches, so the main branch is turned on at a low voltage. During a turn-off process of the auxiliary branch, the main branch is in an on state, so the auxiliary branch is turned off at zero current. Since the devices are thyristors or IGBTs, a device capacity is relatively large and a loss is relatively low.

The controllable current source type converter valve designed by the present disclosure adopts a bridge arm hybrid topology. Due to that the main current-carrying branch uses thyristors and the auxiliary branch uses IGBTs, and the two branches are connected in parallel and hybrid, both large current carrying capability and turn-off capability are provided.

### Example 2

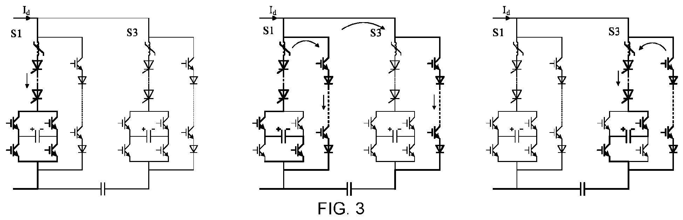

The present disclosure further provides a control method based on the controllable current source type converter valve topology. Specifically, a current I_{d} flows as shown in FIG. 3. During normal current flow, current flows through the thyristor and a full-bridge module of the main branch of S1, carrying rated current and overload current. During commutation, taking a voltage zero crossing point of the capacitor as an initial timing moment of a sequence, taking a voltage zero crossing point of the capacitor as an initial timing moment of a sequence, and performing inter-bridge arm commutation of the turn-off controllable six-pulse converter bridge through a trigger angle;
for example, inter-bridge arm commutation between the first turn-off controllable device topology structure S1 and a third turn-off controllable device topology structure S3 of the controllable current source type converter valve topology is performed through a trigger angle;
where, in response to a current of the auxiliary branch of the turn-off controllable device topology structure of the controllable current source type converter valve topology reaching a maximum, commutating the auxiliary branch of the turn-off controllable device topology structure to the main branch; and in response to the current of the auxiliary branch of the turn-off controllable device topology structure of the controllable current source type converter valve topology reaching zero, commutating the main branch of the turn-off controllable device topology structure to the auxiliary branch.

In the present embodiment, performing inter-bridge arm commutation between the first turn-off controllable device topology structure and the third turn-off controllable device topology structure of the controllable current source type converter valve topology includes:
closing the thyristor of the main branch of the first turn-off controllable device topology structure and the first IGBT and the fourth IGBT of the H-bridge structure, closing the IGBT and the thyristor of the auxiliary branch of the first turn-off controllable device topology structure, closing the IGBT and the thyristor of the auxiliary branch of the third turn-off controllable device topology structure, opening the second IGBT and the third IGBT of the H-bridge structure of the main branch of the first turn-off controllable device topology structure, and opening all IGBTs of the H-bridge structure of the main branch of the third turn-off controllable device topology structure.

In the present embodiment, the commutating the main branch of the turn-off controllable device topology structure to the auxiliary branch includes:
closing the IGBT and the thyristor of the auxiliary branch of the turn-off controllable device topology structure, opening the first IGBT and the fourth IGBT of the H-bridge structure of the main branch of the turn-off controllable device topology structure, and opening the thyristor of the main branch after current transfer is completed.

In the present embodiment, the commutating the auxiliary branch of the turn-off controllable device topology structure to the main branch includes:
closing the thyristor of the main branch of the turn-off controllable device topology structure and the second IGBT and the third IGBT of the H-bridge structure, closing all IGBTs and thyristors of the auxiliary branch, and opening the IGBT and the thyristor of the auxiliary branch after current transfer is completed.

The zero crossing point may be obtained by means of software phase-locked loop calculation and hardware zero crossing acquisition. The trigger angle is calculated mainly based on amplitudes of an active power and a reactive power of a system, combined with an amplitude and a phase of an AC voltage, thereby calculating an amplitude and a phase angle difference of a capacitor voltage, and then obtaining a turn-on moment of a bridge arm according to the phase angle difference, that is, a delay time of bridge arm turn-on. A turn-on time width of the bridge arm is controlled to control a current flowed from a DC side into an AC side, thereby controlling a current flowing into a capacitor and a current of an AC system, and thus controlling a charging voltage of the capacitor.

An adjustment of the active power and the reactive power by the topology of the present disclosure mainly depends on an ability to achieve commutation at any time. Based on the zero-crossing point, the commutation process is defined into two specific types according to a magnitude of a commutation voltage at an active commutation moment: positive voltage commutation: a voltage of a turning-off bridge arm is higher than that of a turning-on bridge arm, with a trigger angle less than 0; and negative voltage commutation: a voltage of a turning-off bridge arm is lower than that of a turning-on bridge arm, with a trigger angle greater than 0. As shown in FIG. 3. The two commutation processes mean that the converter may operate at a leading angle or a lagging angle, indicating that the converter may generate and absorb reactive power.

The controllable current source type converter valve topology according to the embodiments of the present disclosure completely eliminates an influence of converter transformer leakage reactance on the commutation process, and the converter operates without a commutation angle, thereby greatly reducing a reactive power consumption of the system. A nonlinear element arrester does not participate in the commutation process, so a difficulty of voltage sharing among different elements of the auxiliary branch of a converter valve is reduced, and a structure of the auxiliary branch is simplified.

It will be understood by those skilled in the art that the embodiments of the present disclosure may be provided as methods, systems, or computer program products. Therefore, the present disclosure may take a form of an entirely hardware embodiment, an entirely software embodiment, or an embodiment combining software and hardware aspects. Furthermore, the present disclosure may take a form of a computer program product embodied on one or more computer-usable storage media (including but not limited to disk storage, compact disc-read-only memory (CD-ROM), optical storage, etc.) containing computer-usable program code embodied therein.

The present disclosure is described with reference to flowcharts and/or block diagrams of methods, devices (systems), and computer program products according to the embodiments of the present disclosure. It will be understood that each flow and/or block of the flowcharts and/or block diagrams, and combinations of flows and/or blocks in the flowcharts and/or block diagrams, may be implemented by computer program instructions. These computer program instructions may be provided to a processor of a general purpose computer, a special purpose computer, an embedded processor, or other programmable data processing devices to produce a machine, such that the instructions executed by the processor of the computer or other programmable data processing devices produce means for implementing the functions specified in a flow or multiple flows of the flowchart and/or a block or multiple blocks of the block diagram.

These computer program instructions may also be stored in a computer-readable memory that may direct a computer or other programmable data processing devices to function in a particular manner, such that the instructions stored in the computer-readable memory produce an article of a manufacture including instruction means which implement the functions specified in a flow or multiple flows of the flowchart and/or a block or multiple blocks of the block diagram.

These computer program instructions may also be loaded onto a computer or other programmable data processing device to enable a series of operational steps to be performed on the computer or other programmable device, so as to produce a computer-implemented process, such that the instructions executed on the computer or other programmable device provide steps for implementing the functions specified in a flow or multiple flows of the flowchart and/or a block or multiple blocks of the block diagram.

It should be finally noted that the above embodiments are merely used to illustrate the technical solutions of the present disclosure, rather than to limit them. Although the present disclosure has been described in detail with reference to the above embodiments, those of ordinary skill in the art should understand that they may still modify the specific implementations of the present disclosure or make equivalent substitutions, and any modification or equivalent substitution that does not depart from the spirit and scope of the present disclosure should be covered within the scope of the claims of the present disclosure.

### INDUSTRIAL APPLICABILITY

The embodiments of the present disclosure provide a controllable current source type converter valve topology, a control method, a device, and a storage medium, relating to the field of direct current power transmission technologies. The controllable current source type converter valve topology includes: a current-limiting reactor connected to a DC side of a turn-off controllable six-pulse converter bridge, where each bridge arm of the turn-off controllable six-pulse converter bridge is provided with a reactor, three-phase outlets are provided by tapping an intermediate point of each bridge arm of the turn-off controllable six-pulse converter bridge, and each outlet wire of the three-phase outlets is connected to a three-phase grid via three first reactors respectively; the three first reactors are respectively connected in parallel with three first switches; a connection point between each three-phase outlet and a first reactor connected to the three-phase outlet is sequentially connected to a second reactor and a capacitor, and each capacitor is connected in parallel with a second switch. The circuit topology provided by the present disclosure uses only controllable devices, passive components such as capacitors and inductors, etc., offering relatively flexible implementation technology, simplicity, ease of operation, and flexible control.

## Claims

1. A controllable current source type converter valve topology, wherein the controllable current source type converter valve topology comprises: a current-limiting reactor connected to a direct current, DC, side of a turn-off controllable six-pulse converter bridge, wherein each bridge arm of the turn-off controllable six-pulse converter bridge is provided with a reactor, three-phase outlets are provided by tapping an intermediate point of each bridge arm of the turn-off controllable six-pulse converter bridge, and each outlet wire of the three-phase outlets is connected to a three-phase grid via three first reactors respectively; the three first reactors are respectively connected in parallel with three first switches; a connection point between each three-phase outlet and a first reactor connected to the three-phase outlet is sequentially connected to a second reactor and a capacitor, and each capacitor is connected in parallel with a second switch.

2. The controllable current source type converter valve topology according to claim 1, wherein the turn-off controllable six-pulse converter bridge includes: a first branch, a second branch, and a third branch connected in parallel with each other; wherein
the first branch includes a first turn-off controllable device topology structure and a second turn-off controllable device topology structure connected in series;
the second branch includes a third turn-off controllable device topology structure and a fourth turn-off controllable device topology structure connected in series; and
the third branch includes a fifth turn-off controllable device topology structure and a sixth turn-off controllable device topology structure connected in series.

3. The controllable current source type converter valve topology according to claim 1, wherein a turn-off controllable device topology structure includes a main branch and an auxiliary branch connected in parallel with each other; wherein
the main branch includes: a saturable reactor, a thyristor, and an H-bridge structure connected in series; and
the auxiliary branch includes: an insulated gate bipolar transistor, IGBT, and a thyristor connected in series.

4. The controllable current source type converter valve topology according to claim 3, wherein the H-bridge structure includes a first IGBT, a second IGBT, a third IGBT, and a fourth IGBT; wherein
a series branch provided by the first IGBT and the second IGBT is connected in parallel with a series branch provided by the third IGBT and the fourth IGBT, and a capacitor is connected between a connection point of the first IGBT and the second IGBT and a connection point of the third IGBT and the fourth IGBT.

5. The controllable current source type converter valve topology according to claim 4, wherein the main branch is provided with a plurality of thyristors, and the auxiliary branch is provided with a plurality of IGBTs and a plurality of thyristors.

6. The controllable current source type converter valve topology according to claim 5, wherein a configuration ratio of a number of reactors connected on a bridge arm of the turn-off controllable six-pulse converter bridge to a number of thyristors included in the turn-off controllable device topology structure connected on the bridge arm of the turn-off controllable six-pulse converter bridge is 2:x, wherein x is any value between 8 and 13, inclusive.

7. The controllable current source type converter valve topology according to claim 3, wherein the turn-off controllable device topology structure further includes an arrester connected in parallel with the main branch and the auxiliary branch.

8. A control method based on the controllable current source type converter valve topology according to any one of claims 4 to 7, wherein the method comprises:
taking a voltage zero crossing point of the capacitor as an initial timing moment of a sequence, and performing inter-bridge arm commutation of the turn-off controllable six-pulse converter bridge through a trigger angle;
wherein, in response to a current of the auxiliary branch of the turn-off controllable device topology structure of the controllable current source type converter valve topology reaching a maximum, commutating the auxiliary branch of the turn-off controllable device topology structure to the main branch; and in response to the current of the auxiliary branch of the turn-off controllable device topology structure of the controllable current source type converter valve topology reaching zero, commutating the main branch of the turn-off controllable device topology structure to the auxiliary branch.

9. The method according to claim 8, wherein the performing inter-bridge arm commutation of the turn-off controllable six-pulse converter bridge comprises:
closing the thyristor of the main branch of the first turn-off controllable device topology structure and the first IGBT and the fourth IGBT of the H-bridge structure, closing the IGBT and the thyristor of the auxiliary branch of the first turn-off controllable device topology structure, closing the IGBT and the thyristor of the auxiliary branch of the third turn-off controllable device topology structure, opening the second IGBT and the third IGBT of the H-bridge structure of the main branch of the first turn-off controllable device topology structure, and opening all IGBTs of the H-bridge structure of the main branch of the third turn-off controllable device topology structure, in response to performing inter-bridge arm commutation between the first turn-off controllable device topology structure and the third turn-off controllable device topology structure of the controllable current source type converter valve topology.

10. The method according to claim 8, wherein the commutating the main branch of the turn-off controllable device topology structure to the auxiliary branch comprises:
closing the IGBT and the thyristor of the auxiliary branch of the turn-off controllable device topology structure, opening the first IGBT and the fourth IGBT of the H-bridge structure of the main branch of the turn-off controllable device topology structure, and opening the thyristor of the main branch after current transfer is completed.

11. The method according to claim 8, wherein the commutating the auxiliary branch of the turn-off controllable device topology structure to the main branch comprises:
closing the thyristor of the main branch of the turn-off controllable device topology structure and the second IGBT and the third IGBT of the H-bridge structure, closing all IGBTs and thyristors of the auxiliary branch, and opening the IGBT and the thyristor of the auxiliary branch after current transfer is completed.

12. An electronic device, wherein the electronic device comprises the controllable current source type converter valve topology according to any one of claims 1 to 7.

13. A computer-readable storage medium, wherein the computer-readable storage medium is stored with a computer program, and the computer program is configured to execute the method according to any one of claims 8 to 11.
